# EUROPEAN PATENT APPLICATION

(11) **EP 3 812 976 A1**
(43) Date of publication of application: **28.04.2021**
(21) Application number: 20200841.3
(22) Date of filing: 08.10.2020
(51) Int. Cl.: G06Q 10/00

(54) **INFORMATION DISPLAY SYSTEM AND METHOD OF DISPLAYING INFORMATION**

(30) Priority: 23.10.2019 JP 2019193080
(71) Applicant: Hitachi Building Systems Co., Ltd., Chiyoda-ku Tokyo 101-8941 (JP)
(72) Inventor: TAKAHASHI, Takehiro, Tokyo, 101-8941 (JP); RO, Ka, Tokyo, 101-8941 (JP); KUMAKURA, Youichi, Tokyo, 101-8941 (JP); KOIKE, Yukihiro, Tokyo, 101-8941 (JP); ITO, Hideki, Tokyo, 101-8941 (JP)
(74) Representative: MERH-IP Matias Erny Reichl Hoffmann Patentanwälte PartG mbB

(57) **Abstract**

Provided is an information display system that allows a customer to recognize what a current support status is like at a glance. The information display system (100) includes a support status management unit (134) that manages a stop cause indicating a cause of a stop of a facility installed in a building (101) and a status of support for a failure in the facility in association with each other, the status of the support for the failure in the facility including at least support-in-progress indicating that the failure is being supported and support-completed indicating that the support for the failure has been completed, and a display control unit (135) that displays the stop cause managed by the support status management unit (134) on a display terminal (140) to be identifiable as the support-in-progress or the support-completed.

## Description

### Technical Field

The present invention relates to an information display system and a method of displaying information, and is suitable for application to an information display system and a method of displaying information capable of displaying, for example, a status of a facility installed in a building.

### Background Art

Conventionally, it has been known that in a site that requires maintenance work for an elevating machine, support for the elevating machine, or the like, for example, for a major customer, a dashboard prepared as a part of the customer's facility displays a screen including estimated time for restore from the failure of the elevating machine and a progress of the restoring work to reduce the customer's anxiety (see Patent Literature 1).

### Citation List

### Patent Literature

Patent Literature 1: JP 2019-116377 A

### Summary of Invention

### Technical Problem

In a technique disclosed in Patent Literature 1, details of a failure, a support status indicating a status of support for the failure (support-in-progress, support-completed, or the like), a history of each status such as a date and time of the failure appear in a list. It is therefore difficult for the customer to understand what the current support status is like.

The present invention has been made in consideration of the above point, and is intended to propose an information display system and the like that allow a customer to recognize at a glance what the current support status is like.

### Solution to Problem

In order to solve the above problem, in the present invention, an information display system that displays a status of a facility installed in a building includes a support status management unit that manages a stop cause indicating a cause of a stop of the facility installed in the building and a status of support for a failure in the facility in association with each other, the status of the support for the failure in the facility including at least support-in-progress indicating that the failure is being supported and support-completed indicating that the support for the failure has been completed, and a display control unit that displays the stop cause managed by the support status management unit on a display terminal to be identifiable as the support-in-progress or the support-completed.

In the above configuration, for example, the support-in-progress stop cause and the support-completed stop cause are displayed to be identifiable. Thus, for example, the user can easily understand the current situation is like.

### Advantageous Effects of Invention

The present invention can provide a highly convenient information display system.

### Brief Description of Drawings

Fig. 1 is a diagram showing an example of a configuration of an information display system according to a first embodiment.
Fig. 2 is a table showing an example of a data structure of a display name management DB according to the first embodiment.
Fig. 3 is a table showing an example of support status management information according to the first embodiment.
Fig. 4 is an exemplary flowchart of an information providing process according to the first embodiment.
Fig. 5 is a diagram showing an example of a support status screen according to the first embodiment.
Fig. 6 is an exemplary flowchart of an information providing process according to a second embodiment.
Fig. 7 is an exemplary flowchart of an information providing process according to a third embodiment.

### Description of Embodiments

Hereinafter, an embodiment of the present invention will be described in detail with reference to the drawings. In the present embodiment, a technique for displaying a support status indicating a status of support for a failure of a facility installed in a building will be mainly described. In the present embodiment, a failure of a facility means that the facility does not operate normally (failure in a narrow sense) and/or that the facility operates in a different manner from a normal manner (abnormality). Note that, support for a failure of a facility includes operations such as facility maintenance work, facility inspection work, and facility restoration work.

For example, in the present embodiment, a screen showing the support status displays information that allows the customer to recognize at a glance "whether there is a failure now" and "a stop cause and a support status" which the customer wants to know. For example, the support-in-progress stop cause is red, the support-completed (restored) stop cause is blue. The stop cause is displayed as an icon. The stop cause is a cause of a stop indicating why the facility is stopped or why the facility has been stopped, and comprehensively includes a plurality of failures for the customer to easily understand. Such a display allows the customer to easily recognize whether the facility is currently normal and whether support for the failure has been completed.

In the following description, when description is made without distinguishing elements of the same type, common parts of reference signs including branch numbers (parts other than branch numbers) are used. When description is made by distinguishing elements of the same type, reference signs including branch numbers may be used. For example, when a support-in-progress icon is described without distinguishing from others, it is described as "support-in-progress icon 511". When an individual support-in-progress icon is described by distinguishing from others, it is described as a "support-in-progress icon 511-1" or a "support-in-progress icon 511-2".

### (1) First Embodiment

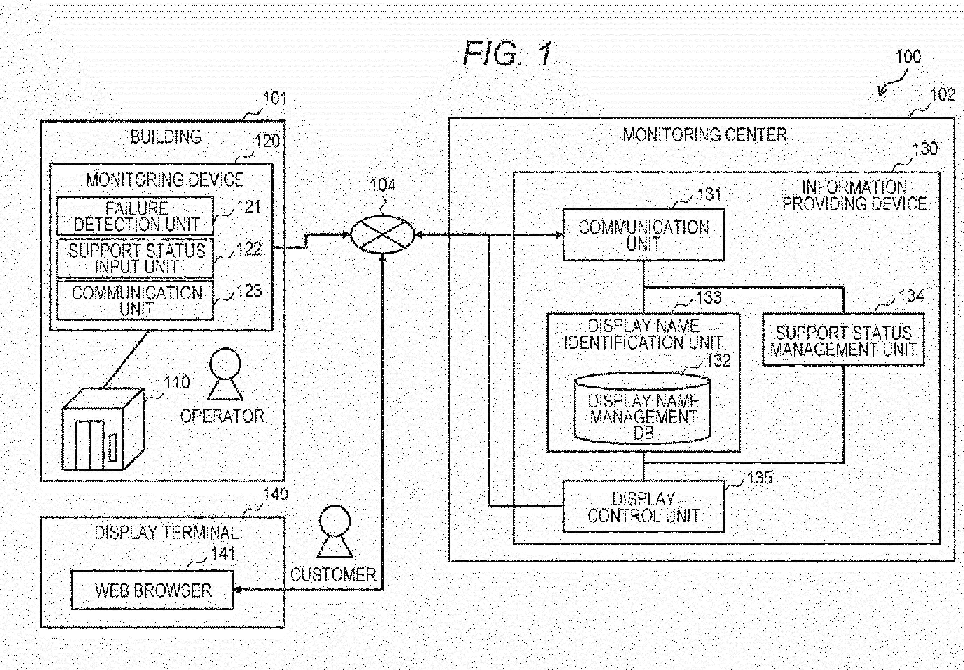

In Fig. 1, a reference sign 100 denotes an information display system according to a first embodiment as a whole.

Fig. 1 is a diagram showing an example of a configuration of an information display system 100.

The information display system 100 includes an elevating machine 110 and a monitoring device 120 installed in a building 101, an information providing device 130 provided in a monitoring center 102, and a display terminal 140 used by a customer. The monitoring device 120 and the information providing device 130 are communicably connected via a network 104. The information providing device 130 and the display terminal 140 are communicably connected via the network 104.

The building 101 is a building, an apartment, a shopping mall, a warehouse, or the like. The building 101 is not limited to these. The building 101 is provided with various facilities. The facilities provided in the building 101 are managed by a given customer. In the present embodiment, the elevating machine 110 will be described as an example of the facility provided in the building 101. However, the facility may be an air conditioner, a parking lot facility, a refrigeration air conditioner, an electrical facility, an automatic door, other building facilities, or the like.

Specifically, the building 101 is provided with at least one elevating machine 110 and the monitoring device 120.

The elevating machine 110 is an elevator, an escalator, or the like. The elevating machine 110 is provided with diagnostic sensors (not shown) used for diagnosing failures, at various locations.

The monitoring device 120 is an information processing device (computer) such as a control panel or a personal computer, and includes a central processing unit (CPU), a random access memory (RAM), a read only memory (ROM), a hard disk drive (HDD), a communication device, and the like (not shown).

Functions of the monitoring device 120 (failure detection unit 121, support status input unit 122, communication unit 123, and the like) may be implemented by, for example, the CPU reading a program stored in the ROM into the RAM and executing the program (software), by hardware such as a dedicated circuit, or by a combination of software and hardware. Some of the functions of the monitoring device 120 may be implemented by another computer capable of communicating with the monitoring device 120.

The monitoring device 120 manages a speed, an operation, and the like of the elevating machine 110, and diagnoses the elevating machine 110 in accordance with predetermined diagnostic items. For example, the failure detection unit 121 determines whether values detected by the diagnostic sensors exceed a certain threshold, and generates and stores failure state data including failure cause information indicating a cause of failure (failure cause) of the diagnostic item determined as excess (for example, failure cause ID), failure status information indicating a status of an operator's support for the failure (failure status information indicating an unsupported state), occurrence time information indicating time when the failure occurred, and model information such as a serial number of the elevating machine 110. The failure status information is either unsupported status information indicating an unsupported status in which support for the failure of the elevating machine 110 has not been started, support-in-progress failure status information indicating a support-in-progress status in which the support for the failure of the elevating machine 110 is in progress, or support-completed failure status information indicating a support-completed status in which the support for the failure of the elevating machine 110 has been completed.

Further, the monitoring device 120 is provided with various switches (not shown) for maintenance, inspection, and the like of the elevating machine 110. For example, the support status input unit 122 outputs a start signal indicating that the support for the failure has started to the failure detection unit 121 in response to an operation of a switch related to a start of the support for the failure by the operator. The failure detection unit 121 generates and stores failure state data including support-in-progress failure status information, start time information indicating time when the support for the failure is started, and model information upon receipt of the start signal. For example, the support status input unit 122 outputs an end signal indicating that the support for the failure has been completed to the failure detection unit 121 in response to the operation of the switch related to the end of the support for the failure by the operator. Upon receipt of the end signal, the failure detection unit 121 generates and stores the failure state data including the support-completed failure status information, the end time information indicating the time when the support for the failure is completed, and the model information.

The communication unit 123 transmits the failure state data to the information providing device 130 at a predetermined timing. The predetermined timing may be real time (for example, timing when the failure state data is generated), may be at a certain time interval, may be time set in advance, or may be another timing.

The monitoring center 102 is a center including a control center, a data center, a contact center, and the like. The monitoring center 102 includes a system that constantly monitors the facility of the building 101 for 24 hours a day, 365 days a year. In the monitoring center 102, when a failure occurs in the elevating machine 110, a process for contacting the customer and dispatching an operator from the nearest business site for prompt treatment is performed.

For example, the monitoring center 102 includes the information providing device 130. The information providing device 130 is an information processing device (computer) such as a server device and a laptop computer, and includes a CPU, a RAM, a ROM, a HDD, a communication device, and the like (not shown).

Functions of the information providing device 130 (the communication unit 131, the display name identification unit 133, the support status management unit 134, the display control unit 135, and the like) may be implemented, for example, by the CPU reading the program stored in the ROM into the RAM, and executing the program (by software), by hardware such as a dedicated circuit, or by a combination of software and hardware. Further, some of the functions of the information providing device 130 may be implemented by another computer capable of communicating with the information providing device 130.

For example, the communication unit 131 receives the failure state data transmitted from the monitoring device 120, for example.

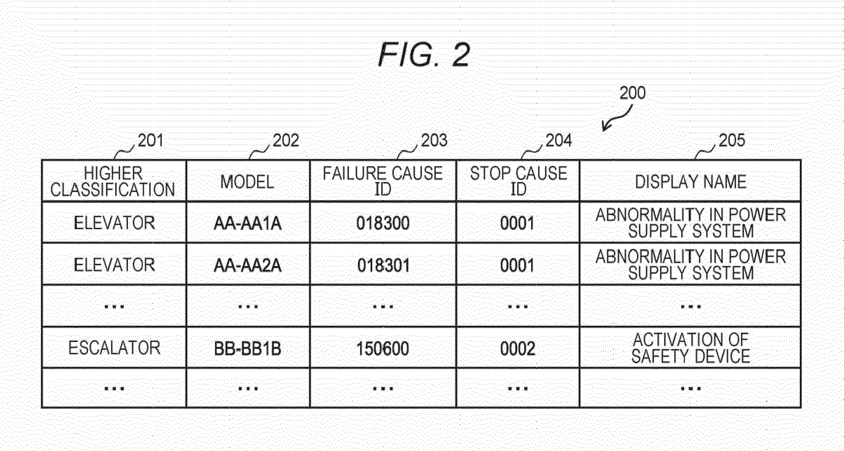

For example, the display name identification unit 133 identifies a display name (name of a stop cause) corresponding to the failure cause in the failure state data by referring to a display name management DB 132 included in the information providing device 130. The display name management DB 132 stores information in which failure causes and display names are associated with each other. A data structure of the display name management DB 132 will be described later with reference to Fig. 2.

For example, the support status management unit 134 determines from the failure status information of the failure state data whether the support is in progress or has been completed. For example, the display control unit 135 changes a display mode of the display name in accordance with the failure support status (support- in-progress or support-completed) in the elevating machine 110, generates screen information (for example, world wide web (web) page), and transmits the screen information to the display terminal 140.

The display terminal 140 is a tablet terminal, a smartphone, or the like, and is a terminal used by a customer. The display terminal 140 includes a web browser 141. The display terminal 140 displays a screen (for example, a support status screen described later) indicating the support status of the elevating machine 110 based on the received screen information by the web browser 141.

In the present embodiment, for example, when a failure occurs in the elevating machine 110, the monitoring device 120 transmits the occurrence of the failure (failure state data) to the information providing device 130 via the network 104, and the operator is dispatched to the building 101 and works on supporting for the failure.

During the support for the failure, the monitoring device 120 transmits, to the monitoring center 102 via network 104, the failure state data including the failure cause information determined from the values detected at the diagnostic sensors provided at various location in the elevating machine 110 exceeding the certain threshold, the failure status information input (registered) by the operator, and the model information.

The information providing device 130 receives the failure state data transmitted by the monitoring device 120 in real time. Then, the information providing device 130 reads the failure cause information from the received failure state data, collates the failure cause information with the display name management DB 132, and extracts the display name corresponding to the failure cause. Further, the information providing device 130 reads the failure status information from the failure state data that has been received, and determines whether the support status information is unsupported, support-in-progress, or support-completed.

At this occasion, the information providing device 130 does not display (hides) the display name, for example, upon determination that the support status information is unsupported status information. For example, upon determination that the support status information is the support-in-progress status information, the information providing device 130 displays the display name as a red icon. Further, for example, upon determination that the support status information is the support-completed status information, the information providing device 130 displays the display name as a blue icon within a predetermined time (for example, 24 hours) from the end time of the failure state data, and the information providing device 130 hides the icon and displays the icon as history information on another screen after the predetermined time has passed.

Fig. 2 is a table showing an example of the data structure of the display name management DB 132 (display name management table 200).

The display name management table 200 stores information in which a higher classification 201, a model 202, a failure cause ID 203, a stop cause ID 204, and a display name 205 are associated with each other. The higher classification 201 is information capable of classifying the elevating machine 110. The model 202 is information indicating the model of the elevating machine 110 (identification information capable of identifying the elevating machine 110). The failure cause ID 203 is identification information capable of identifying the failure cause. The stop cause ID 204 is identification information capable of identifying the stop cause. The display name 205 is information indicating the name (display name) of the stop cause.

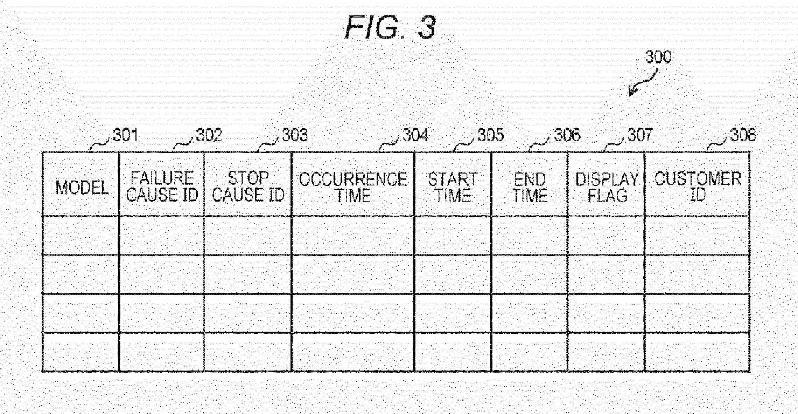

Fig. 3 is a table showing an example of the support status management information (support status management table 300) for the support status management unit 134 to manage the support status. The support status management table 300 is added and updated based on the failure state data.

The support status management table 300 stores information in which a model 301, a failure cause ID 302, a stop cause ID 303, occurrence time 304, start time 305, end time 306, a display flag 307, and a customer ID 308 are associated with each other.

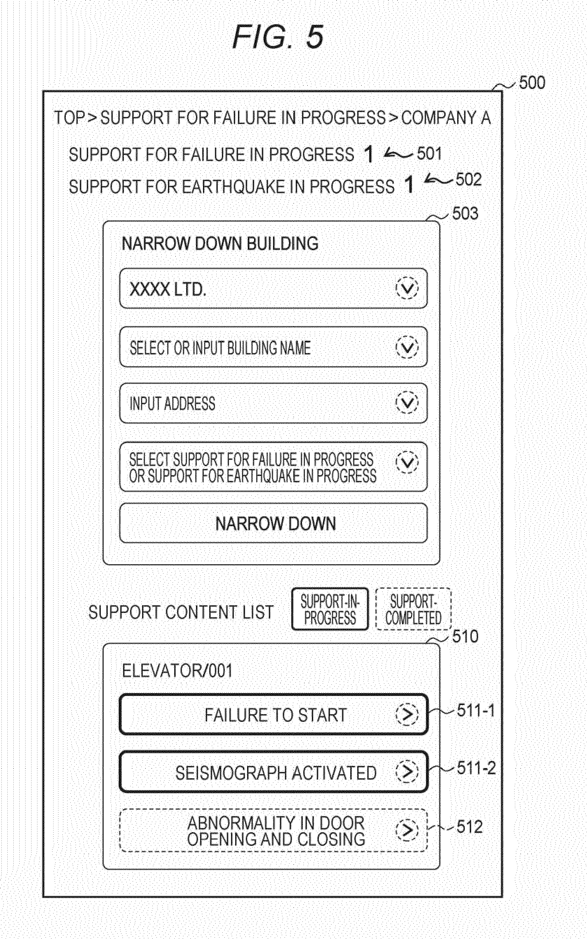

The model 301 is information indicating the model of the elevating machine 110. The failure cause ID 302 is identification information capable of identifying the failure cause. The stop cause ID 303 is identification information capable of identifying the stop cause. The occurrence time 304 is information indicating the time when the failure has occurred. The start time 305 is information indicating the time when the support for the failure is started. The end time 306 is information indicating the time when the support for the failure is ended. The display flag 307 is information indicating whether to display the support status (support-completed icon described later) on the support status screen. The support status screen will be described later with reference to Fig. 5. The customer ID 308 is identification information capable of identifying the customer.

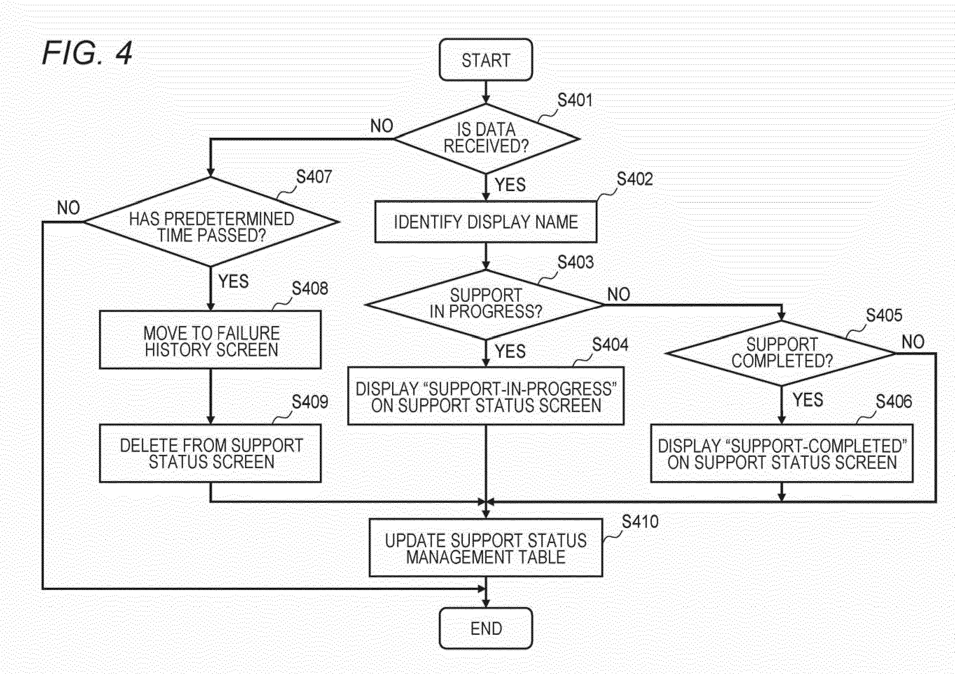

Fig. 4 is an exemplary flowchart of an information providing process executed by the information providing device 130. The information providing process is repeatedly executed at a predetermined cycle.

In step S401, the information providing device 130 determines whether the failure state data has been received. Upon determination that the failure state data has been received, the information providing device 130 moves the process to step S402. Upon determination that the failure state data has not been received, the information providing device 130 moves the process to step S407.

In step S402, the information providing device 130 reads the failure cause information (failure cause ID) from the received failure state data, collates the failure cause information with the display name management DB 132, and identifies the display name corresponding to the failure cause ID.

In step S403, the information providing device 130 reads the failure status information from the failure state data, and determines whether the failure status information is support-in-progress failure status information (whether the failure is being supported). Upon determination that the failure is being supported, the information providing device 130 moves the process to step S404. Upon determination that the failure is not being supported, the information providing device 130 moves the process to step S405.

In step S404, the information providing device 130 generates screen information for displaying the identified display name as an icon in red characters (support-in-progress icon) on the support status screen, transmits the generated screen information to the display terminal 140, and moves the process to step S410. When receiving the screen information, the display terminal 140 displays the support status screen including the icon in which the display name is in red characters.

Note that the information providing device 130 refers to the display name management table 200 and the support status management table 300. Upon determination that the support-in-progress icon of the display name has been already displayed, the information providing device 130 does not have to generate screen information.

Here, for example, when the icon of a support-completed stop cause (support-completed icon) is already present on the support status screen, the information providing device 130 may generate the screen information to display the support-in-progress icon in higher order than (for example, above or before) the support-completed icon. Because the customer is more concerned about the support-in-progress stop cause than the support-completed stop cause, the customer can obtain necessary information more quickly by a display of the support-in-progress icon in higher order than the support-completed icon in this way.

For example, when another support-in-progress icon is present on the support status screen, the information providing device 130 generates screen information to display a new support-in-progress icon in higher order than the another support-in-progress icon. In this way, the support-in-progress icons are accumulated in an order of the start time of the support for the failure, the customer can easily recognize the order in which the support is started.

In step S405, the information providing device 130 reads the failure status information from the failure state data, and determines whether the failure status information is support-completed status information (whether the support for the failure has been completed). Upon determination that support for the failure has been completed, the information providing device 130 moves the process to step S406. Upon determination that support for the failure has not been completed (upon determination that a failure has occurred), the information providing device 130 moves the process to step S410.

In step S406, the information providing device 130 generates screen information for displaying the identified display name as an icon in blue characters (support-completed icon) on the support status screen, transmits the generated screen information to the display terminal 140, and moves the process to step S410.

Specifically, the information providing device 130 refers to the display name management table 200 and the support status management table 300. Upon determination that support for the failure of every failure cause belonging to the stop cause having the identified display name, the information providing device 130 generates screen information for displaying the support-completed icon.

At this time, for example, when another support-completed icon exists in lower order of (for example, below or after) the support-in-progress icon on the support status screen, the information providing device 130 may generate screen information to display a new support-completed icon between the existing support-in-progress icon and the another support-completed icon (accumulating the support-completed icons). In this way, the support-completed icons accumulated in an order in which the support has been completed allows the customer to easily recognize the order in which the support has been completed (which location has been restored earlier).

In step S407, the information providing device 130 refers to the support status management table 300 and determines whether there is a stop cause that has passed a predetermined time after every failure cause belonging to the stop cause has been already supported. Upon determination that there is such a stop cause, the information providing device 130 moves the process to step S408. Upon determination that there is not such a stop cause, the information providing device 130 moves the process to step S409.

In step S408, the information providing device 130 generates screen information displaying information on the stop cause (for example, support-completed icon) on a failure history screen (not shown), and transmits the screen information to the display terminal 140.

In step S409, the information providing device 130 generates screen information for deleting the support-completed icon related to the stop cause from the support status screen, and transmits the screen information to the display terminal 140.

In step S410, the information providing device 130 updates the support status management table 300. The information providing device 130 stores customer management information (not shown) in which a model and a customer ID are associated with each other.

For example, upon determination as NO in step S405, the information providing device 130 registers the model read from the failure state data, the failure cause ID, the occurrence time, the customer ID identified from the customer management information, and the stop cause ID corresponding to the display name specified in step S402 on the support status management table 300 as a new record.

Further, for example, when step S404 is performed, the information providing device 130 stores the start time read from the failure state data in the record corresponding to the model and the failure cause ID read from the failure state data.

Further, for example, when step S406 is performed, the information providing device 130 stores the end time read from the failure state data in the record corresponding to the model and the failure cause ID read from the failure status data.

Further, for example, when step S409 described later is performed, the information providing device 130 stores information indicating not to display (for example, false) in the display flag 307 of the record corresponding to the failure cause ID belonging to the stop cause ID.

The information providing process is not limited to the above process. For example, steps S407 to S409 may be repeatedly performed in parallel with steps S401 to S406 (for example, as a separate process).

Fig. 5 is a diagram showing an example of the support status screen (support status screen 500). The support status screen 500 is displayed on the display terminal 140.

The support status screen 500 displays a number 501 of failure-supported machines and a number 502 of earthquake-responded machines. The number 501 of failure-supported machines is the number of elevating machines 110 managed by the customer in which support for a failure is being supported. The number 502 of earthquake-responded machines is the number of elevating machines 110 managed by the customer in which a seismograph is activated.

Further, the support status screen 500 is provided with a search unit 503 capable of searching the building 101. If the customer is, for example, a real estate company which owns many buildings 101, the customer can narrow down to the desired building 101 and elevating machine 110 by inputting a keyword such as a building name, an address, or a support status through the search unit 503 to execute a search, and easily recognize the failure support status.

In addition, the support status screen 500 is provided with a support status display area 510. The support status display area 510 displays a support-in-progress icon 511 and a support-completed icon 512. For example, the support status display area 510 displays the support-in-progress icon 511 and the support-completed icon 512 for each elevating machine 110.

In the support-in-progress icon 511, for example, the display name is displayed in characters in a first color (for example, red). Further, for example, the support-in-progress icon 511 may be provided with a frame of the first color. In the support-completed icon 512, for example, the display name is displayed in characters in a second color (for example, blue) which is different from the first color. Further, for example, the support-completed icon 512 may be provided with a frame of the second color.

In this way, in the support status display area 510, the support-in-progress icon 511 and the support-completed icon 512 are displayed to be identifiable by the color of the icon, and thus the customer can recognize the failure support status at a glance. Because the support-in-progress icon 511 is of high interest to the customer, the first color of the support-in-progress icon 511 is preferably a relatively attractive color (generally, a warm color), and the second color of the support-completed icon 512 is preferably a relatively less attractive color (generally, a cold color).

In the example of Fig. 5, the support status screen 500 displays a support-in-progress icon 511-1, a support-in-progress icon 511-2, and a support-completed icon 512. In this situation, when the support-in-progress icon 511-1 changes from support-in-progress to support-completed for the failure, the support-in-progress icon 511-1 is changed to the support-completed icon. At this time, the color of the support-in-progress icon 511-1 may be changed from red to blue without changing a position of the support-in-progress icon 511-1. Further, for example, the position of the support-in-progress icon 511-1 may be changed between the support-in-progress icon 511-2 and the support-completed icon 512, and the color of the support-in-progress icon 511-1 may be changed from red to blue.

In the present embodiment, when the support for the failure of the elevating machine 110 is started, the display name in which failure content is classified (translated) in a large frame for the customer to easily understand is displayed as an icon in red for support-in-progress and in blue for support-completed. Then, when 24 hours have passed since the end of the support for the failure, the icon is hidden. This configuration allows the customer to easily understand whether the current state is normal and what the stop cause is.

### (2) Second Embodiment

When failures in multiple facilities are being supported, the customer may want to see an overview of how far the facilities are restored. However, if information on failures that have been supported (for example, the support-completed icon) is deleted from the support status screen, the customer will not be able to see the overview. In this respect, in the present embodiment, when support for failures of all the facilities of the customer have been completed, the corresponding icons are hidden, and thus the customer can see an overview of how far the facilities are restored. In the present embodiment, configurations different from the first embodiment will be mainly described.

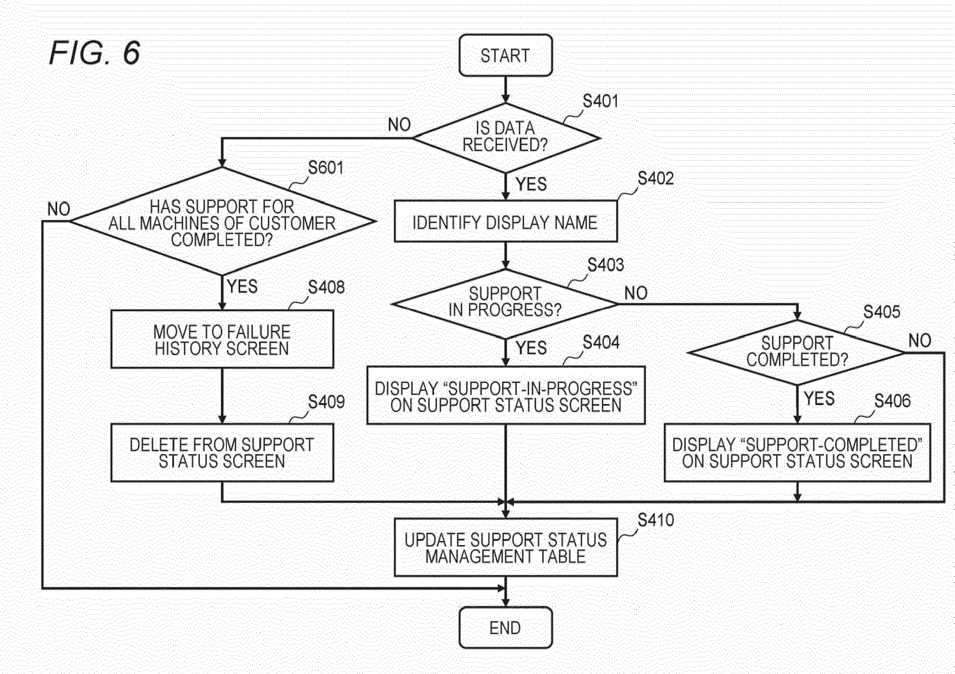

Fig. 6 is a diagram showing an example of a flowchart of the information providing process executed by the information providing device 130. In this flowchart, step S601 is performed instead of step S407 in the flowchart shown in Fig. 4.

In step S601, the information providing device 130 refers to the support status management table 300 and determines whether the support for the failure of all the elevating machines 110 managed by the customer has been completed (whether support for the customer's machines has been completed). Upon determination that support for the failures of the customer's machines has been completed, the information providing device 130 moves the process to step S408. Upon determination that support for the failures of the customer's machine has not been completed, the information providing device 130 ends the information providing process.

In step S408, the information providing device 130 generates screen information to display the support-completed icons of all the elevating machines 110 managed by the customer on the failure history screen (not shown), and transmits the screen information to the display terminal 140.

In step S409, the information providing device 130 generates screen information for deleting the support-completed icons of all the elevating machines 110 managed by the customer from the support status screen, and transmits the screen information to the display terminal 140.

The present embodiment is not limited to the above configuration. For example, in the support status management table 300, information may be stored in which the model 301, the failure cause ID 302, the stop cause ID 303, the occurrence time 304, the start time 305, the end time 306, the display flag 307, the customer ID 308, and the building ID (not shown) are associated with each other. The building ID is identification information capable of identifying the building 101.

In this case, for example, in step S601, the information providing device 130 determines for each building 101 whether the support for the failure of all the elevating machines 110 managed by the customer has been completed (whether support for the customer's machines has been completed). Upon determination that support for the failures of the customer's machines has been completed, the information providing device 130 moves the process to step S408. Upon determination that support for the failures of the customer's machine has not been completed, the information providing device 130 ends the information providing process. In step S409, the information providing device 130 generates screen information for deleting the support-completed icons of all the elevating machines 110 of the building 101 in which support for the failures have been completed from the support status screen, and transmits the screen information to the display terminal 140.

Further, the present embodiment, for example, the support-completed icon may be displayed within a predetermined time (for example, 24 hours) since support for the failures of all the elevating machines 110 has been completed, and the support-completed icon may be displayed as history information on a separate screen after the predetermined time has elapsed.

In the present embodiment, the customer can recognize that, for example, if one of two elevating machines 110 that have stopped due to an identical stop cause is restored, the other elevating machine is soon to be restored. In this way, when the support-completed icon of the restored facility remains to imply the restoration of the other facilities having identical stop cause, the customer can be assured early.

### (3) Third Embodiment

If the information in which support has been completed (for example, the support-completed icon) is deleted from the support status screen when the predetermined time has elapsed, the support-completed icon may disappear before the customer can see even once and appropriately recognize the support status. In this respect, in the present embodiment, when the support-completed icon has appeared a certain number of times, the support-completed icon is hidden. Thus, the customer can appropriately recognize the support status. In the present embodiment, configurations different from the first embodiment will be mainly described.

In the present embodiment, the support status management table 300 stores information in which a model 301, a failure cause ID 302, a stop cause ID 303, occurrence time 304, start time 305, end time 306, a display flag 307, a customer ID 308, and a display count (not shown) are associated with each other. The display count is information indicating the number of times the support-completed icon has appeared on the support status screen. The display count may be counted every time the search unit 503 conducts a search, every time the support-completed icon is pressed, every time it is determined to be YES in step S406, or every time screen information is transmitted.

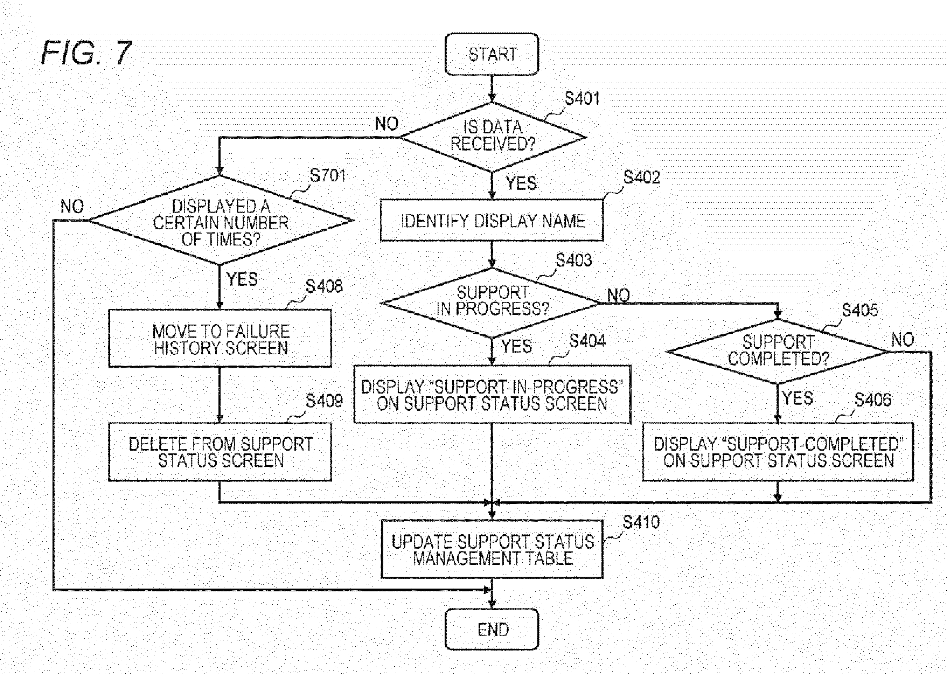

Fig. 7 is a diagram showing an example of a flowchart of the information providing process executed by the information providing device 130. In this flowchart, step S701 is performed instead of step S407 in the flowchart shown in Fig. 4.

In step S701, the information providing device 130 refers to the support status management table 300 and determines whether there is a support-completed icon whose display count exceeds a threshold (for example, a certain number of times) (whether the support-completed icon has been displayed a certain number of times). Upon determination that the support-completed icon has been displayed a certain number of times, the information providing device 130 moves the process to step S408. Upon determination that the support-completed icon has not been displayed a certain number of times, the information providing device 130 ends the information providing process.

In step S408, the information providing device 130 generates screen information to display the support-completed icons whose display count exceeds a certain number of times on the failure history screen (not shown), and transmits the screen information to the display terminal 140.

In step S409, the information providing device 130 generates screen information for deleting the support-completed icons whose display count exceeds a certain number of times from the support status screen, and transmits the screen information to the display terminal 140.

Note that the present embodiment is not limited to the above configuration. For example, the support-completed icon may be displayed within a predetermined time (for example, 24 hours) since the support-completed icon has appeared a certain number of times, and the support-completed icon may be displayed as history information on a separate screen after the predetermined time has elapsed.

In the present embodiment, hiding the support-completed icon when the support-completed icon has appeared a certain number of times can avoid a situation where the support-completed icon cannot be confirmed, or the support-completed icon kept displayed persistently, making it difficult to recognize the support status due to unnecessary information, and thus allows the customer to appropriately recognize the support status.

### (4) Other Embodiments

Note that, in the above embodiment, a case where the present invention is applied to the information display system is described. However, the present invention is not limited to this, and is widely applicable to various other systems, devices, methods, and programs.

In the above embodiment, a case where the monitoring device 120 transmits the failure state data to the information providing device 130 in real time, and the information providing device 130 manages the support status management information has been described. However, the present invention is not limited to this. The monitoring device 120 may manage a part of the support status management information (for example, the model 301, the failure cause ID 302, the occurrence time 304, the start time 305, the end time 306, or the customer ID 308), and the monitoring device 120 may transmit a part of the support status management information to the information providing device 130 at a predetermined timing (for example, periodically, or at time set in advance).

In the above embodiment, the color of the icons, the display names, and the like has been described as examples by which the support-in-progress icon 511 and the support-completed icon 512 can be identified. However, the present invention is not limited to this. For example, sizes of the icons and display names may be adopted. For example, in the support-in-progress icon 511, the support-in-progress display name is displayed in a first font size. In the support-completed icon 512, the support-completed display name is displayed in a second font size which is smaller than the first font size. For example, the support-in-progress icon 511 has a frame having the first size, and the support-completed icon 512 has a frame having the second size smaller than the first size.

In the above embodiment, a case where the information providing device 130 includes the display name management DB 132 has been described. However, the present invention is not limited to this. The monitoring device 120 may include the display name management DB 132, or another computer provided in the monitoring center 102 may include the display name management DB 132.

In the above embodiment, the configuration of each table is an example. One table may be divided into two or more tables, or all or a part of two or more tables may be one table.

In the above embodiment, for convenience of description, various data have been described using the XX table and the XX file. However, the data structure is not limited and may be expressed as XX information or the like.

In the above description, information such as programs, tables, and files for implementing the functions can be stored in a memory, a hard disk, a storage device such as a solid state drive (SSD), or a recording medium such as an IC card, an SD card, or a DVD.

The embodiment described above has, for example, the following characteristic configuration.

An information display system (for example, information display system 100) that can display a status of a facility (for example, elevating machine 110, air conditioner, parking lot facility, refrigeration air conditioner, electrical facility, automatic door, or other building facilities) installed in a building (for example, building 101) includes a support status management unit

(for example, support status management unit 134) that manages a stop cause (for example, stop cause ID 303) indicating a cause of a stop of the facility installed in the building and a status (for example, occurrence time 304, start time 305, or end time 306 may be stored to make the status of the support identifiable, or a flag may be provided to make the status of the support identifiable) of support for a failure in the facility in association with each other, the status of the support for the failure in the facility including at least support-in-progress indicating that the failure is being supported and support-completed indicating that the support for the failure has been completed, and a display control unit (for example, display control unit 135) that displays information indicating the stop cause (for example, display name 205, stop cause ID, location in elevating machine 110 related to the stop cause, and the like) managed by the support status management unit on a display terminal (for example, display terminal 140) to be identifiable as the support-in-progress or the support-completed (for example, as the support-in-progress icon or the support-completed icon, or as the support-in-progress or the support-completed in a mutually different color).

In the above configuration, for example, the support-in-progress stop cause and the support-completed stop cause are displayed to be identifiable. Thus, for example, the user can easily understand the current situation is like.

The support status management unit manages the identification information (for example, customer ID, customer ID and building ID, customer ID and site ID) capable of identifying the facilities managed by the customer, in association with the stop causes of the facilities. The display control unit identifies the facilities managed by the customer based on the identification information managed by the support status management unit, and hides the information indicating the support-completed stop cause for the customer upon determination that the support for the failures of all the facilities managed by the customer (see, for example, steps S601 and S409).

In the above configuration, when support for all the facilities managed by the customer has been completed, the information indicating the support-completed stop causes is hidden. Thus, for example, the customer can see the overview of how far the support for the facilities has been completed. In addition, for example, hiding the information indicating the support-completed stop cause when support for all the facilities installed in the building have been completed, allows the customer to see the overview of how far the support for the facilities have been completed for each building.

The support status management unit manages count information indicating a number of times the display control unit has displayed the support-completed stop cause (for example, a display count) in association with the stop cause, and the display control unit identifies information indicating the support-completed stop cause whose number of times exceeds a threshold (for example, a certain number of times), based on the count information managed by the support status management unit, and hides the support-completed stop cause that has been identified (see, for example, steps S701 and S409).

In the above configuration, hiding the information indicating the support-completed stop cause, for example, when the information indicating the support-completed stop cause has appeared a certain number of times can avoid a situation where the information indicating the support-completed stop cause cannot be confirmed, or the information indicating the support-completed stop cause kept displayed persistently, making it difficult to recognize the support status due to unnecessary information, and thus allows the customer to appropriately recognize the support status.

When the support for the failure of the facility installed in the building is completed, the support status management unit sets the status of the support for the failure from the support-in-progress to the support-completed (for example, the end time 306 may be stored or a flag indicating the support-completed may be stored), and manages time information indicating time at which the support ends (for example, the end time 306) in association with the status of the support for the failure (see, for example, steps S406 and S410), and the display control unit identifies information indicating the support-completed stop cause in which time at which the support for the failure ends has elapsed a predetermined time, based on the time information managed by the support status management unit, and hides the information indicating the support-completed stop cause that has been identified (see, for example, steps S407 and S409).

In the above embodiment, hiding the information indicating the stop cause having been supported when a predetermined time has passed since the support has completed can avoid a situation where the support-completed icon kept displayed persistently, making it difficult to recognize the support status due to unnecessary information, and thus allows the customer to appropriately recognize the support status.

The information display system includes a failure detection unit (for example, failure detection unit 121) that detects that the facility installed in the building has a failure, and a display name identification unit (for example, display name identification unit 133) that identifies a display name of the stop cause corresponding to the failure detected by the failure detection unit based on display name management information (for example, display name management DB 132) associated with a failure cause indicating a cause of the failure and the display name of the stop cause (for example, display name 205), in which in the display name management information, at least one failure cause is associated with one stop cause, the support status management unit manages the display name of the stop cause identified by the display name identification unit in association with the stop cause, and the display control unit displays the display name of the stop cause managed by the support status management unit on the display terminal to be identifiable as the support-in-progress or the support-completed.

In the above configuration, the support status is displayed, for example, not by each failure cause but by the stop cause indicating a cause of a stop of a facility, which is of high interest to the customer. Thus, the customer can easily recognize the support status.

Further, the configurations described above may be appropriately changed, rearranged, combined, or omitted without departing from the spirit of the present invention.

### Reference Signs List

- 100: Information display system
- 134: Support status management unit
- 135: Display control unit

## Claims

1. An information display system (100) configured to display a status of a facility installed in a building (101), the information display system (100) comprising:
a support status management unit (134) that manages a stop cause indicating a cause of a stop of the facility installed in the building (100) and a status of support for a failure in the facility in association with each other, the status of the support for the failure in the facility including at least support-in-progress indicating that the failure is being supported and support-completed indicating that the support for the failure has been completed; and
a display control unit (135) that displays the stop cause managed by the support status management unit (134) on a display terminal (140) to be identifiable as the support-in-progress or the support-completed.

2. The information display system (100) according to claim 1, **characterized in that**
the support status management unit (134) manages identification information capable of identifying facilities managed by a customer in association with the stop cause of the facilities, and
the display control unit (135) identifies the facilities managed by the customer based on the identification information managed by the support status management unit (134), and hides information indicating the stop cause that is support-completed for the customer upon determination that the support for the failures of all the facilities managed by the customer has been completed.

3. The information display system (100) according to claim 1, **characterized in that**
the support status management unit (134) manages count information indicating a number of times the display control unit (135) has displayed the support-completed stop cause in association with the stop cause, and
the display control unit (135) identifies information indicating the support-completed stop cause whose number of times exceeds a threshold, based on the count information managed by the support status management unit (134), and hides the support-completed stop cause that has been identified.

4. The information display system (100) according to claim 1, **characterized in that**
when the support for the failure of the facility installed in the building (101) ends, the support status management unit (134) sets the status of the support for the failure from the support-in-progress to the support-completed, and manages time information indicating time at which the support is completed in association with the status of the support for the failure, and
the display control unit (135) identifies information indicating the support-completed stop cause in which time at which the support for the failure ends has elapsed a predetermined time, based on the time information managed by the support status management unit (134), and hides the information indicating the support-completed stop cause that has been identified.

5. The information display system (100) according to claim 1, further comprising:
a failure detection unit (121) that detects that the facility installed in the building (101) has a failure; and
a display name identification unit (133) that identifies a display name (205) of the stop cause corresponding to the failure detected by the failure detection unit (121) based on display name management information associated with a failure cause indicating a cause of the failure and the display name (205) of the stop cause, **characterized in that**
in the display name management information, at least one failure cause is associated with one stop cause,
the support status management unit (134) manages the display name (205) of the stop cause identified by the display name identification unit (133) in association with the stop cause, and
the display control unit (135) displays the display name (205) of the stop cause managed by the support status management unit (134) on the display terminal (140) to be identifiable as the support-in-progress or the support-completed.

6. A method for displaying information configured to display a status of a facility installed in a building, the method comprising:
managing, by a support status management unit (134), a stop cause indicating a cause of a stop of the facility installed in the building (101) and a status of support for a failure in the facility in association with each other, the status of the support for the failure in the facility including at least support-in-progress indicating that the failure is being supported and support-completed indicating that the support for the failure has been completed; and
displaying, by a display control unit (135), the stop cause managed by the support status management unit (134) on a display terminal (140) to be identifiable as the support-in-progress or the support-completed.
